(19) Europäisches Patentamt
European Patent Office
Office européen des brevets

(11) Publication number : **0 207 135**
**B1**

(12) **EUROPEAN PATENT SPECIFICATION**

(45) Date of publication of patent specification : **05.04.89**

(51) Int. Cl.[4] : **C 08 J 9/10**, C 08 L 23/02, C 08 J 3/24

(21) Application number : **86900518.1**

(22) Date of filing : **19.12.85**

(86) International application number : **PCT/US 85/02505**

(87) International publication number : **WO/8603759 (03.07.86 Gazette 86/14)**

(54) **OLEFIN POLYMER FOAMS.**

(30) Priority : **21.12.84 US 684687**
**12.12.85 US 806157**

(43) Date of publication of application : **07.01.87 Bulletin 87/02**

(45) Publication of the grant of the patent : **05.04.89 Bulletin 89/14**

(84) Designated contracting states : **AT BE CH DE FR GB IT LI LU NL SE**

(56) References cited :
DE-A- 1 569 535
GB-A- 928 656
GB-A- 1 126 857
US-A- 3 965 054
US-A- 4 252 906

(73) Proprietor : **UNION CARBIDE CORPORATION**
**39 Old Ridgebury Road**
**Danbury Connecticut 06817 (US)**

(72) Inventor : **TOPCIK, Barry**
**545 Spring Valley Drive**
**Bridgewater, NJ (US)**
Inventor : **BARNABEO, Austin, Emidio**
**533 Spring Valley Drive**
**Bridgewater, NJ (US)**

(74) Representative : **Barz, Peter, Dr. et al**
**Patentanwälte Dipl.-Ing. G. Dannenberg Dr. P. Weinhold, Dr. D. Gudel Dipl.-Ing. S. Schubert, Dr. P. Barz**
**Siegfriedstrasse 8**
**D-8000 München 40 (DE)**

Note : Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

EP 0 207 135 B1

Jouve, 18, rue St-Denis, 75001 Paris, France

## Description

This invention relates to olefin polymer foams having improved cell structures and relatively smooth outer surfaces, which are especially useful in the manufacture of household furniture, recreational products, automotive parts and the like by conventional thermoforming molding techniques.

As a general rule, foams are produced by an extrusion operation in which a foamable composition is extruded into a shaped article and the shaped article allowed to expand and foam ; or by a compression molding operation. Producing a foam by a compression molding operation is a relatively simple operation which involves, initially, placing a preform of a foamable composition, having a volume equal to about 103 percent of the volume of the mold cavity to provide a seal around the cavity, into the cavity of the mold, placing the filled mold in a hydraulic press and continuing according to Procedures 1 or 2 described below. The foamable composition itself contains a polymer, an organic peroxide, a gas generating compound and generally, well known additives such as anti-oxidants, lubricants and the like.

Procedure 1

The temperature of the hydraulic press is maintained at high levels, generally in excess of about 160 °C and the residence time in the press is such as to achieve substantially full activation of the peroxide and the gas generating compound. The hydraulic press is then opened, allowing the composition to expand and foam.

Procedure 2

The temperature of the hydraulic press is maintained at a level such that the composition is partially cured. The partially cured composition, is preferably cooled, removed from the compression mold, placed in a hot oven and allowed to expand and foam.

Extruding foamable compositions into shaped articles and allowing the shaped articles to expand and foam involves a different set of conditions than those set forth in Procedures 1 and 2. In the production of foams by the « extrusion » technique, the rate of crosslinking of the polymer, i. e. peroxide cure, and the rate of decomposition of the gas generating compound must be carefully balanced. If the rate of crosslinking is too rapid, expansion of the foamable composition will be unduly restricted. On the other hand, if the rate at which the gas generating compound decomposes substantially exceeds the rate at which crosslinking occurs, the evolved gases will escape and little, if any, expansion of the composition will take place.

The present invention provides for foams having improved cell structures, that is, relatively small, uniform cells and relatively smooth outer surfaces by either the compression molding operation or by the extrusion technique. Foams of improved quality are produced, according to the present invention, by utilizing a foamable composition comprising an olefin polymer or copolymer, a gas generating compound, p,p′-oxybisbenzene sulfonyl hydrazide, in an amount of 0.7 to 3 parts by weight, a monomeric acrylate ester of a polyhydric compound in an amount of 0.3 to 2 parts by weight, an organic peroxide in an amount of 0.5 to 2 parts by weight and a hydrolyzable unsaturated silane in an amount of 0.5 to 10 parts by weight, all parts by weight being based on 100 parts by weight of olefin polymer or copolymer.

Monomeric acrylate esters of polyhydric compounds are commercial products, available from Sartomer Company, a subsidiary of Atlantic Richfield Company, and include triethylene glycol dimethacrylate, ethylene glycol dimethacrylate, tetraethylene glycol dimethacrylate, polyethylene glycol dimethacrylate, 1,3-butylene glycol diacrylate, 1,4-butylene glycol diacrylate, diethylene glycol diacrylate, diethylene glycol dimethacrylate, 1,6-hexane diol diacrylate, polyethylene glycol diacrylate, tetraethylene glycol diacrylate, pentaerythritol tetraacrylate, 1,3-butylene glycol dimethacrylate, trimethylolpropane trimethacrylate, trimethylolpropane triacrylate and the like.

A particularly desirable monomeric acrylate is trimethylolpropane triacrylate.

Olefin polymers and copolymers which can be foamed in accordance with the present invention are produced by well known methods from monoolefins and diolefins described below.

Suitable monoolefins have the general formula :

$$C_{\alpha}H_{2\alpha} \qquad \text{Formula I}$$

wherein $\alpha$ has a value of at least 2. Exemplary of olefins falling within the scope of Formula I are : ethylene, propylene, butene-1, pentene-1, 4-methylpentene-1, hexene-1, heptene-1, octene-1 and the like.

Suitable diolefins have the general formula :

$$C_{\beta}H_{2\beta-2} \qquad \text{Formula II}$$

wherein $\beta$ has a value of at least 3. Exemplary of diolefins falling within the scope of Formula II are : 1,4-pentadiene, 1,3-hexadiene, 1,5-hexadiene, 1,4-octadiene, ethylidene norbornene and the like.

Illustrative of monomers which can be polymerized with monoolefins and/or diolefins are styrene, p-methyl styrene, α-methyl styrene, p-chloro styrene, vinyl naphthalene and similar aryl olefins and substituted aryl olefins ; nitriles such as acrylonitrile, methacrylonitrile, α-chloroacrylonitrile and the like ; vinyl methyl ketone, vinyl methyl ether, vinylidene chloride ; vinyl acetate ; alkyl acrylates which fall within the scope of the following formula :

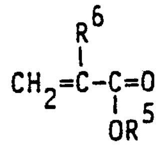

Formula III

wherein $R^6$ is hydrogen or methyl and $R^5$ is alkyl having 1 to 8 carbon atoms inclusive. Illustrative compounds encompassed by this formula are : methyl acrylate, ethyl acrylate, t-butyl acrylate, methyl methacrylate, n-butyl acrylate, n-butyl methacrylate, 2-ethylhexyl acrylate, chloroethyl acrylate and the like ; provided that the olefinic content is at least about 0.1 percent by weight, preferably about 1 to about 50 percent by weight.

It is to be understood that mixtures of reactants can be utilized to produce suitable copolymers.

Desirable copolymers are alkylene-alkyl acrylate copolymers generally having a density (ASTM D-1505 with conditioning as in ASTM D-147-72) of about 0.92 to about 0.94 and a melt index (ASTM D-1238 at 303 kPa, 44 psi, tested pressure) of about 0.1 to about 500 decigrams per minute. These copolymers generally have about 1 to about 50 percent by weight combined alkyl acrylate, preferably about 2 to about 20 percent by weight combined alkyl acrylate.

Preferred copolymers are ethylene-propylene copolymers, ethylene-butene copolymers, ethylene-hexene copolymers and the like produced under low pressures on the order of about 103 to 2069 kPa (15 to 300 psi).

Particularly preferred polymers have densities (ASTM D-1505) of about 0.850 to about 0.970, preferably about 0.875 to about 0.930. These polymers can be prepared by reacting a mixture containing about 50 to about 99.9 mole percent, preferably about 75 to about 96 mole percent ethylene and from about 0.1 to about 50 mole percent and preferably about 4 to about 25 mole percent of at least one $C_3$ to $C_8$ alpha olefins previously described.

Illustrative of suitable organic peroxides are the polymer hydroperoxides, such as polyethylene hydroperoxide, and other such polymer hydroperoxides, as for example are disclosed in US-A-2 911 298 ; the perester peroxides, such as t-butyl peracetate, t-butyl peroxyisobutyrate, di-t-butyl diperphthalate, t-butyl perbenzoate, di-t-butyl dipermethyl malonate, di-t-amyl dipermethyl malonate, di-t-hexyl diperethyl succinate, di-t-hexyl diperglutarate, di-t-amyl dipersuccinate and the like, for instance as are disclosed in US-A-2 763 635 and 2 698 863 ; diacyl aromatic peroxides exemplary of which are the peroxides having the formula :

$$(R'CO)_2O_2$$

wherein R′ is an aryl radical, such as benzoyl peroxide, 2,4-dichlorobenzoyl peroxide, p-chlorobenzoyl peroxide and the like ; diacryl aliphatic peroxides, such as those having the formula :

$$(R_2CO)_2O_2$$

wherein $R_2$ is an alkyl group, as for example, acetyl peroxide, caprylyl peroxide, myristoyl peroxide, lauroyl peroxide and the like ; dibasic acid peroxides, such as succinic acid peroxide ; the ketone peroxides, such as methyl ethyl ketone peroxide, cyclohexanone peroxide and the like ; the aldehyde peroxides, such as hydroheptyl peroxide and the like ; peroxides having the formula :

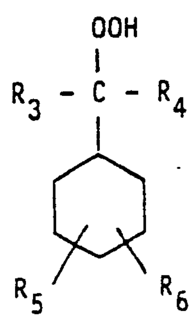

wherein $R_3$ and $R_4$ are alkyl groups, $R_5$ is dialkyl methyl or trialkyl methyl ; with the alkyl group in each case containing a maximum of 8 carbon atoms and $R_6$ is hydrogen or an alkyl group containing a

maximum of 8 carbon atoms such as 1,1-dimethyl-1-(isopropyl cyclohexyl)methyl hydroperoxide, 1,1-dimethyl-1-(diisopropyl cyclohexyl)methyl hydroperoxide and the like as are further disclosed in US-A-2 776 954 ; di(aralkyl) peroxides of the formula :

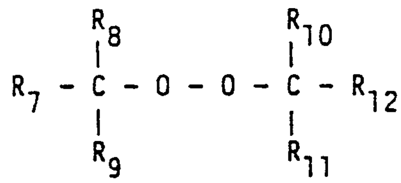

wherein $R_7$ is aryl, $R_8$, $R_9$, $R_{10}$ and $R_{11}$ are hydrogen or alkyl groups of less than 4 carbon atoms and $R_{12}$ is aryl, such as dibenzyl peroxide, bis-(α-methylbenzyl)peroxide, bis-(α,α-dimethylbenzyl)peroxide, (di-α-cumylperoxide), bis-(α-propylbenzyl)peroxide, benzyl-(α-methylbenzyl)peroxide, benzyl-(α-methyl-p-methylbenzyl)peroxide, benzyl-(α-methyl-p-isopropylbenzyl)peroxide and the like as are further disclosed in US-A-2 826 570 ; hydroperoxides, such as 2,5-dimethylhexane-2,5-dihydroperoxide, p-menthane hydroperoxide, t-butylhydroperoxide, benzoin peroxide and the like ; di-tertiary alkyl peroxides such as di-t-butyl peroxide, 2,5-bis-(tert-butylperoxy)-2,5-dimethylhexane and the like.

Gas generating compounds are well known in the art and include azodicarbonamide, dinitrosopentamethylenetetramine, N,N'-dimethyl-N,N'-dinitrosoterephthalamide, p-toluene sulfonyl semicarbazide and the like. The actual amounts of gas generating compounds used will depend upon the actual density of foam desired. This amount generally ranges from about 2 to about 20 parts by weight gas generating compound per 100 parts by weight of olefin polymer charged.

Additives such as lubricants, anti-oxidants and the like, all well known in the art, can be added to the foamable compositions.

The foamable compositions are formulated by simply admixing the components in a suitable vessel such as a Brabender mixer, a two roll mill or a Banbury mixer.

Preparation of the foams can be conveniently carried out as described in the examples which follow.

In formulating foamable compositions, mixtures of materials can be used.

Furthermore, by including a hydrolyzable, unsaturated silane in the composition water-curable foams can be prepared in accordance with this invention.

The unsaturated silane is added in amounts of about 0.5 to about 10 percent by weight, preferably about 1.0 to about 5 percent by weight based on the weight of olefin polymer content.

Suitable unsaturated silane reactants for purposes of this invention have the general formula :

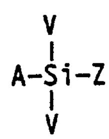

Formula IV

wherein A is an unsaturated hydrocarbon radical or an unsaturated hydrocarbonyloxy radical and wherein other variables are as defined below.

Particularly desirable unsaturated silanes fall within the scope of Formula V and Formula VI.

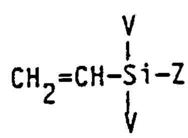

Formula V

wherein each V can be hydrogen, a hydrocarbon radical or a hydrolyzable group and Z is a hydrolyzable group.

Illustrative of suitable hydrocarbon radicals or hydrolyzable groups for V are alkyl radicals having 1 to 18 carbon atoms inclusive, preferably 1 to 6 carbon atoms inclusive such as methyl, ethyl, n-propyl, isopropyl, n-butyl, n-hexyl and the like ; alkoxy radicals having 1 to 18 carbon atoms inclusive, preferably 1 to 8 carbon atoms inclusive, such as methoxy, ethoxy, propoxy, hexoxy, octoxy, dodecyloxy, methoxyethoxy and the like ; aryl radicals having 6 to 8 carbon atoms inclusive such as phenyl, methylphenyl, ethylphenyl and the like ; cycloaliphatic radicals having 5 to 8 carbon atoms inclusive such as cyclopentyl, cyclohexyl, cyclohexyloxy and the like.

Z, as stated, is a hydrolyzable group among which can be noted alkoxy radicals as previously described for V or oxyaryl radicals such as oxyphenyl and the like ; oxyaliphatic radicals such as oxyhexyl and the like ; halogens such as chlorine and the like and other hydrolyzable groups as further described in US-A-3 408 420.

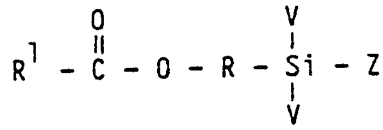 Formula VI

wherein R[1] is an unsaturated monovalent hydrocarbon radical having a maximum of 18 carbon atoms as for example alkylene radicals having 2 to 18 carbon atoms inclusive, preferably 2 to 4 carbon atoms inclusive such as ethylene, propylene, isobutylene and the like ; R is a hydrocarbon radical or an oxy substituted hydrocarbon radical, and V and Z are as previously defined.

Illustrative of suitable radicals for R are alkylene radicals having one to 18 carbon atoms inclusive, preferably one to 6 carbon atoms inclusive, such as methylene, ethylene, propylene, butylene, hexylene and the like ; alkoxy radicals having one to 18 carbon atoms inclusive, preferably one to 6 carbon atoms inclusive such as methyloxymethyl, methyloxypropyl, ethyloxyethyl, ethyloxypropyl, propyloxypropyl, propyloxybutyl, propyloxyhexyl and the like.

Among suitable silanes falling within the scope of Formulae IV-VI can be noted vinyltrimethoxy silane, vinyltriethoxy silane, vinyltris-(n-propoxy) silane, vinylbis-(methoxy)methyl silane, vinylbis-(ethoxy)methyl silane, vinylbis-(n-propoxy)methyl silane, vinylmethoxydimethyl silane, vinylethoxydimethyl silane, allyltrimethoxy silane as well as the following silanes :

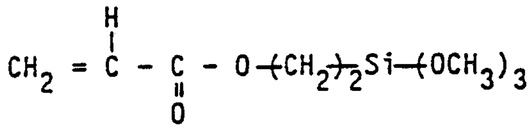

β-acryloxyethyltrimethoxy silane

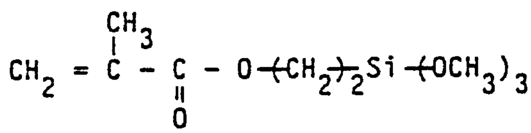

β-methacryloxyethyltrimethoxy silane

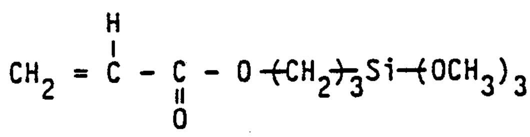

γ-acryloxypropyltrimethoxy silane

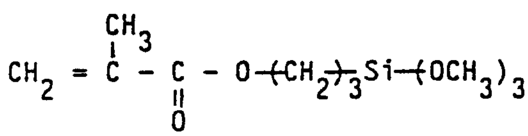

γ-methacryloxypropyltrimethoxy silane

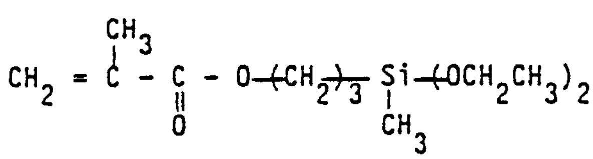

γ-methacryloxypropyl(methyldiethoxy) silane

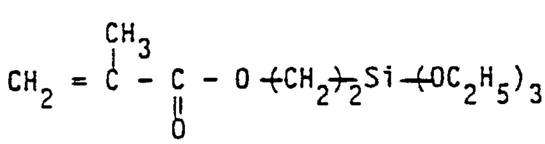

β-methacryloxyethyltriethoxy silane

(Continued)

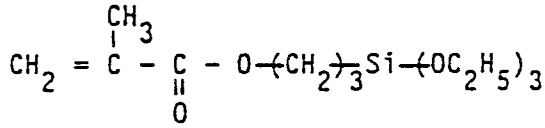

γ-methacryloxypropyltriethoxy silane

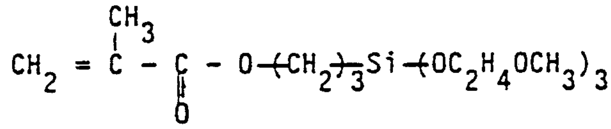

γ-methacryloxypropyl-tris-(2-methoxyethoxy) silane

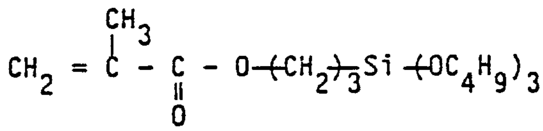

β-methacryloxypropyl-tris-(n-butoxy) silane

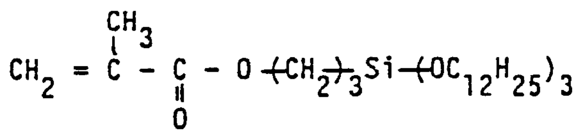

γ-methacryloxypropyl-tris-(n-dodecyloxy) silane

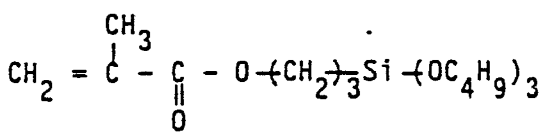

γ-methacryloxypropyl-tris-(iso-butoxy) silane

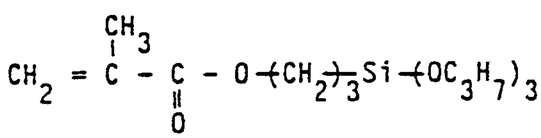

γ-methacryloxypropyl-tris-(isopropoxy) silane

Upon activation of the organic peroxide and gas generating compound, the thermoplastic olefin polymer peroxide cures, reacts with the hydrolyzable, unsaturated silane to form a silane modified polymer and the shaped article expands to a water-curable foamed product.

Water-curing of these foams is effected at temperatures on the order of about 70 °C to about 100 °C. The actual time of the curing cycle will depend, in part, upon the temperatures employed. Crosslinking can be accelerated by the use of a silanol condensation catalyst. Among suitable silanol condensation catalysts are metal carboxylates such as dibutyltin dilaurate, stannous acetate, stannous octoate, lead naphthenate, zinc octoate, iron-2-ethyl hexoate and the like, and organo titanates such as tetramethyl titanate, tetraethyl titanate, tetraisopropyl titanate and the like, added to the foamable compositions as shown by the Examples which follow.

In the Examples and Controls which follow, foams were produced by fluxing each composition, the formulations of which are set forth in the Tables, in parts by weight per 100 parts by weight of olefin

polymer in the composition, in a Brabender mixer which had been preheated to a temperature of 100 °C to 130 °C, pelleting the fluxed composition, extruding the pelletized composition into a sheet of about 0.48 cm (3/16 inch) in thickness and placing the sheet in an oven which was at a temperature of 180 °C-240 °C, activating the organic peroxide and gas generating compound with the result that sheet expanded and foamed.

Table 1

| | Control 1 | Control 2 | Control 3 | Control 4 |
|---|---|---|---|---|
| Polyethylene having a melt index of 2 | 88.75 | 88.75 | 88.75 | 78.75 |
| Di- -cumyl peroxide | 1.0 | 1.0 | 1.0 | 1.0 |
| Masterbatch | 30.0 | 30.0 | 30.0 | 30.0 |
| p,p'-Oxybis-benzene sulfonyl hydrazide | — | 2.0 | — | — |
| Trimethylol propane triacrylate | — | — | 1.5 | — |
| Ethylene/propylene/ethylidene norbonene rubber | — | — | — | 10.0 |
| Foam | | | | |
| Quality | very poor | very poor | poor | very poor |
| Density, $g/cm^3$ | very high | very high | 0.046 | very high |
| Number of cells per $cm^2$, counted under a magnifying glass | very low | very low | 105 | very low |

The formulation of the masterbatch composition of Table 1 was as follows :

Table 2

| | Parts by Weight |
|---|---|
| Ethylene-ethyl acrylate copolymer containing about 18 percent by weight ethyl acrylate | 11.25 |
| Zinc Oxide* | 2.5 |
| Stearic acid (Lubricant) | 1.0 |
| Azodicarbonamide | 15.0 |
| Polymerized 1,2-dihydro-3,4,5-trimethyl quinoline (anti-oxidant) | 0.25 |

* lowers decomposition temperature of the azodicarbonamide, a gas generating compound

(See Table 3 page 8)

Table 3

| Formulation | Control 4 | Example 1 | Example 2 | Example 3 |
|---|---|---|---|---|
| Ethylene-ethyl acrylate* copolymer | 87.5 | 87.5 | -- | -- |
| Polyethylene melt index of 2 | -- | -- | 88.75 | 88.75 |
| Di-α-cumyl peroxide | 1.0 | 1.0 | 1.0 | 1.0 |
| Masterbatch composition* | 30.0 | 30.0 | 30.0 | 30.0 |
| Zinc stearate (lubricant) | 1.0 | 1.0 | 1.0 | 1.0 |
| Polymerized 1,2-dihydro-3,4,5-trimethyl quinoline (antioxidant) | 0.25 | 0.25 | 0.25 | 0.25 |
| Vinyltris(2-ethylhexoxy) silane | -- | 4.0 | 4.0 | 4.0 |
| Dibutyltin dilaurate | -- | 0.03 | 0.03 | 0.03 |
| Trimethylol propane triacrylate | -- | 1.0 | 1.0 | 1.0 |
| p,p'-Oxybis-benzene-sulfonyl hydrazide | -- | 2.0 | 2.0 | 2.0 |
| Ethylene-propylene-diene rubber | -- | -- | -- | 10 |
| Percent Decalin Extractables (ASTM-D-2765) | | | | |
| Foamed sheet as prepared | 63.5 | -- | -- | -- |
| Foamed sheet - immersed in 70°C water bath for 16 hours | -- | -- | -- | -- |

* same as described in Table 1

Foams of Examples 1-3 were characterized by fine cells and smooth outer skin. These foams could be thermoformed and water-cured to « fixed » or « set » articles, having improved resistance to deformation at elevated temperatures.

Foam of Control 4 could be thermoformed but not water-cured. Also, this foam was subject to excessive shrinkage at elevated temperatures.

## Claims

1. A foamable composition comprising an olefin polymer or copolymer, a gas generating compound, p,p'-oxybis-benzene sulfonyl hydrazide, in an amount of 0.7 to 3 parts by weight, a monomeric acrylate ester of a polyhydric compound in an amount of 0.3 to 2 parts by weight, an organic peroxide in an amount of 0.5 to 2 parts by weight and a hydrolyzable unsaturated silane in an amount of 0.5 to 10 parts by weight, all parts by weight being based on 100 parts by weight of olefin polymer or copolymer.

2. A foamable composition as defined in claim 1, wherein said hydrazide is present in an amount of about 2 parts by weight, said monomeric acrylate ester is present in an amount of about 1.5 part by weight and said organic peroxide is present in an amount of about 1 part by weight.

3. A foamable composition as defined in claim 1 or 2, wherein said organic peroxide is di-α-cumyl peroxide.

4. A foamable composition as defined in any one of claims 1 to 3, wherein said monomeric acrylate ester is trimethylol propane triacrylate.

5. A foamable composition as defined in any one of claims 1 to 3, wherein said olefin polymer is polyethylene.

6. A foamable composition as defined in any one of claims 1 to 4, wherein said olefin copolymer is an alkylene-alkyl acrylate copolymer.

7. A foamable composition as defined in claim 6, wherein said olefin copolymer is an ethylene-ethyl acrylate. copolymer.

8. A foamable composition as defined in any one of claims 1 to 7, wherein the unsaturated silane is vinyltriethoxy silane or vinyltris(2-ethylhexoxy) silane.

9. A foamable composition as defined in any one of claims 1 to 8, containing an additional gas generating azodicarbonamide, compound.

10. A foam of the composition defined in any one of claims 1 to 9.

11. A shaped article produced from the foamable composition defined in any one of claims 1 to 9.

12. A shaped article produced from the foam defined in claim 10.

13. A process for producing a foamed product which comprises forming a shaped article from a composition according to any one of claims 1 to 9 and, thereafter, subjecting said shaped article to temperatures sufficiently high to activate the gas generating compound and the organic peroxide, with the result that the thermoplastic olefin polymer or copolymer cures and reacts with the hydrolyzable, unsaturated silane to form a silane-modified polymer, and the shaped article expands to a foamed product.

14. A process as defined in claim 13, wherein said organic peroxide is di-α-cumyl peroxide.

15. A process as defined in claim 13 or 14, wherein said monomeric acrylate ester is trimethylol propane triacrylate.

16. A process as defined in any one of claims 13 to 15, wherein said silane is vinyltriethoxy silane or vinyltris(2-ethylhexoxy) silane.

**Patentansprüche**

1. Schäumbare Zusammensetzung, umfassend ein Olefinpolymer oder -copolymer eine gaserzeugende Verbindung p,p'-Oxybisbenzolsulfonylhydrazid in einer Menge von 0,7 bis 3 Gewichtsteilen einen monomeren Acrylsäureester einer Polyhydroxyverbindung in einer Menge von 0,3 bis 2 Gewichtsteilen, ein organisches Peroxid in einer Menge von 0,5 bis 2 Gewichtsteilen und ein hydrolysierbares, ungesättigtes Silan in einer Menge von 0,5 bis 10 Gewichtsteilen, wobei sich alle Gewichtsteile auf 100 Gewichtsteile des Olefinpolymers oder -copolymers beziehen.

2. Schäumbare Zusammensetzung nach Anspruch 1, worin das Hydrazid in einer Menge von etwa 2 Gewichtsteilen anwesend ist, der monomere Acrylsäureester in einer Menge von etwa 1,5 Gewichtsteilen anwesend ist und das organische Peroxid in einer Menge von etwa 1 Gewichtsteil anwesend ist.

3. Schäumbare Zusammensetzung nach Anspruch 1 oder 2, worin das organische Peroxid Di-α-cumylperoxid ist.

4. Schäumbare Zusammensetzung nach irgendeinem der Ansprüche 1 bis 3, worin der monomere Acrylsäureester Trimethylolpropantriacrylat ist.

5. Schäumbare Zusammensetzung nach irgendeinem der Ansprüche 1 bis 3, worin das Olefinpolymer Polyethylen ist.

6. Schäumbare Zusammensetzung nach irgendeinem der Ansprüche 1 bis 4, worin das Olefincopolymer ein Alkylen-Alkylacrylat-Copolymer ist.

7. Schäumbare Zusammensetzung nach Anspruch 6, worin das Olefincopolymer ein Ethylen-Ethylacrylat-Copolymer ist.

8. Schäumbare Zusammensetzung nach irgendeinem der Ansprüche 1 bis 7, worin das ungesättigte Silan Vinyltriethoxysilan oder Vinyltris(2-ethylhexoxy) silan ist.

9. Schäumbare Zusammensetzung nach irgendeinem der Ansprüche 1 bis 8, enthaltend eine zusätzliche gaserzeugende Azodicarbonamid-Verbindung.

10. Schaum der Zusammensetzung nach irgendeinem der Ansprüche 1 bis 9.

11. Geformter Gegenstand aus der schäumbaren Zusammensetzung nach irgendeinem der Ansprüche 1 bis 9.

12. Geformter Gegenstand aus dem Schaum nach Anspruch 10.

13. Verfahren zur Herstellung eines geschäumten Produktes, umfassend die Formung eines geformten Gegenstandes aus einer Zusammensetzung nach irgendeinem der Ansprüche 1 bis 9 und nachfolgend die Behandlung des geformten Gegenstandes bei Temperaturen, die zur Aktivierung der gaserzeugenden Verbindung und des organischen Peroxids ausreichend sind, mit dem Ergebnis, daß das thermoplastische Olefinpolymer oder -copolymer härtet und mit dem hydrolysierbaren, ungesättigten Silan unter Bildung eines silanmodifizierten Polymers reagiert und der geformte Gegenstand sich zu einem geschäumten Produkt ausweitet.

14. Verfahren nach Anspruch 13, worin das organische Peroxid Di-α-cumylperoxid ist.

15. Verfahren nach Anspruch 13 oder 14, worin der monomere Acrylsäureester Trimethylolpropantriacrylat ist.

16. Verfahren nach irgendeinem der Ansprüche 13 bis 15, worin das Silan Vinyltriethoxysilan oder Vinyltris(2-ethylhexoxy) silan ist.

**Revendications**

1. Composition apte au moussage, comprenant un polymère ou un copolymère oléfinique, un composé engendrant un gaz, du p,p'-oxybisbenzènesulfonylhydrazide en une quantité de 0,7 à 3 parties en poids, un ester acrylique monomérique d'un composé polyhydroxylique en une quantité de 0,3 à 2 parties en poids, un peroxyde organique en une quantité de 0,5 à 2 parties en poids et un silane non saturé hydrolysable en une quantité de 0,5 à 10 parties en poids, toutes les parties en poids étant basées sur 100 parties en poids de polymère ou de copolymère oléfinique.

2. Composition apte au moussage suivant la revendication 1, dans laquelle l'hydrazide est présent en une quantité d'environ 2 parties en poids, l'ester acrylique monomérique est présent en une quantité d'environ 1,5 partie en poids et le peroxyde organique est présent en une quantité d'environ 1 partie en poids.

3. Composition apte au moussage suivant la revendication 1 ou 2, dans laquelle le peroxyde organique est le peroxyde de di-α-cumyle.

4. Composition apte au moussage suivant l'une quelconque des revendications 1 à 3, dans laquelle l'ester acrylique monomérique est le triacrylate de triméthylolpropane.

5. Composition apte au moussage suivant l'une quelconque des revendications 1 à 3, dans laquelle le polymère oléfinique est un polyéthylène.

6. Composition apte au moussage suivant l'une quelconque des revendications 1 à 4, dans laquelle le copolymère oléfinique est un copolymère alkylène-acrylate d'alkyle.

7. Composition apte au moussage suivant la revendication 6, dans laquelle le copolymère oléfinique est un copolymère éthylène-acrylate d'éthyle.

8. Composition apte au moussage suivant l'une quelconque des revendications 1 à 7, dans laquelle le silane non saturé est le vinyltriéthoxysilane ou le vinyltris(2-éthylhexoxy) silane.

9. Composition apte au moussage suivant l'une quelconque des revendications 1 à 8, contenant de l'azodicarboxamide comme autre composé engendrant un gaz.

10. Une mousse de la composition suivant l'une quelconque des revendications 1 à 9.

11. Article de forme produit à partir de la composition apte au moussage suivant l'une quelconque des revendications 1 à 9.

12. Article de forme produit à partir de la mousse définie dans la revendication 10.

13. Procédé de production d'un produit cellulaire, qui consiste à produire un article de forme à partir d'une composition suivant l'une quelconque des revendications 1 à 9, puis à exposer l'article de forme à des températures suffisamment hautes pour activer le composé engendrant un gaz et le peroxyde organique, ce qui a pour effet que le polymère ou copolymère oléfinique thermoplastique se réticule et réagit avec le silane non saturé hydrolysable pour former un polymère modifié par le silane, et que l'article de forme donne par expansion un produit cellulaire.

14. Procédé suivant la revendication 13, dans lequel le peroxyde organique est le peroxyde de di-α-cumyle.

15. Procédé suivant la revendication 13 ou 14, dans lequel l'ester acrylique monomérique est le triacrylate de triméthylolpropane.

16. Procédé suivant l'une quelconque des revendications 13 à 15, dans lequel le silane est le vinyltriéthoxysilane ou le vinyltris(2-éthylhexoxy) silane.